# EUROPEAN PATENT APPLICATION

(11) **EP 2 599 850 A1**
(43) Date of publication of application: **05.06.2013**
(21) Application number: 12194368.2
(22) Date of filing: 27.11.2012
(51) Int. Cl.: C09K 11/02, H01J 61/46

(54) **Fluorescent lamp utilizing phosphor with improved lumen maintenance**

(30) Priority: 29.11.2011 US 201113305839
(71) Applicant: General Electric Company, Schenectady, New York 12345 (US)
(72) Inventor: Jansma, Jon Bennett, East Cleveland, OH Ohio 44124 (US); Du, Fangming, East Cleveland, OH Ohio 44124 (US); He, Jianmin, East Cleveland, OH Ohio 44124 (US); Cohen, William Erwin, East Cleveland, OH Ohio 44124 (US)
(74) Representative: Picker, Madeline Margaret

(57) **Abstract**

Disclosed herein is a mercury vapor discharge lamp and methods for making same, where the lamp comprises a phosphor coating layer disposed on at least a portion of the inner surface of the lamp envelope. The phosphor coating layer comprises a phosphor composition comprising a colloidal alumina, particles comprising at least one rare earth compound, and phosphor particles, and the particles comprising at least one rare earth compound are present in the phosphor composition in an amount from about 0.5 percent to about 5 percent of the weight of the phosphor particles. The phosphor particles comprise one or more of zinc silicate, strontium green-blue, strontium red, SECA, CBT, CBM, BAM, BAMn, magnesium germanate, SAE, SEB, yttrium vanadate, or combinations of two or more of the foregoing. The presence of colloidal alumina, the rare earth compound, and these selected phosphors may contribute to an increase at least one of lumen output or lumen maintenance for the lamp, as compared with the same mercury vapor discharge lamp comprising the same phosphor composition without colloidal alumina and without the particles comprising at least one rare earth compound.

## Description

### BACKGROUND

The invention generally involves lighting, and more particularly, involves low pressure mercury discharge lamps such as fluorescent lamps.

Fluorescent lamps employ a low-pressure buffered mercury discharge to produce ultraviolet (UV) light, which is converted to visible light. Phosphors are coated onto the inner surface of the transparent housings of fluorescent lamps to convert UV to visible light. Phosphors in general are crystalline inorganic compounds characterized by their properties of being useful in converting UV light into visible light. Zinc silicate is one such material and is one of the earliest known green phosphors for use in fluorescent lamps. Zinc silicate provides excellent initial brightness and a broad green emission. When mixed with red and blue phosphors, zinc silicate can be used to make an efficient source of white light with excellent color rendering properties. Zinc silicate phosphor is a phosphor made without rare earth elements.

A main limitation for the use of some phosphors (e.g., zinc silicate phosphors) has been poor lumen maintenance (also referred to as brightness maintenance) compared with other phosphor types. Fluorescent lamps employing zinc silicate phosphors for example experience color shift and unacceptably rapid diminution in brightness during operation. Because of this poor lumen maintenance in operating lamps, zinc silicate phosphors have been relegated to special applications where the poor performance with lamp aging can be tolerated. These special applications include green screen lights or specialty phosphor blends for high color rendering index (CRI). As the prices of rare earth elements have increased, more widespread use of zinc silicate phosphor is desirable but depends on finding ways to improve the brightness maintenance of zinc silicate phosphors and other phosphors with similar limitations.

### BRIEF DESCRIPTION OF THE INVENTION

Aspects and advantages of the invention are set forth below in the following description, or may be apparent from the description, or may be learned through practice of the invention.

One embodiment of the present disclosure is directed to a mercury vapor discharge lamp, the lamp comprising, a light-transmissive envelope having an inner surface defining an interior volume; a discharge generator; an ionizable fill gas comprising mercury and an inert gas sealed inside the envelope; and a phosphor coating layer disposed on at least a portion of the inner surface of the envelope. The phosphor coating layer comprises a phosphor composition comprising a colloidal alumina, particles comprising at least one rare earth compound, and phosphor particles. The particles comprising at least one rare earth compound are present in the phosphor composition in an amount from about 0.5 percent to about 5 percent of the weight of the phosphor particles. The phosphor particles comprise one or more of zinc silicate, strontium green-blue, strontium red, SECA, CBT, CBM, BAM, BAMn, magnesium germanate, SAE, SEB, yttrium vanadate, or combinations of two or more of the foregoing.

Another embodiment of the present disclosure is directed to a method for making a mercury discharge fluorescent lamp that includes a substantially transparent envelope having an inner surface defining a interior volume. The method comprises at least a step of disposing a coating on the inner surface of the envelope. The coating comprises a phosphor composition comprising a colloidal alumina, particles comprising at least one rare earth compound, and phosphor particles. The particles comprising at least one rare earth compound are present in the phosphor composition in an amount from about 0.5 percent to about 5 percent of the weight of the phosphor particles. The phosphor particles comprise one or more of zinc silicate, strontium green-blue, strontium red, SECA, CBT, CBM, BAM, BAMn, magnesium germanate, SAE, SEB, yttrium vanadate, or combinations of two or more of the foregoing.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
FIG. 1 shows a first embodiment of a mercury vapor discharge fluorescent lamp according to the present invention with portions cut away and portions shown in cross section;
FIG. 2 schematically shows in an enlarged cross sectional view, the detail A in FIG. 1 depicting an example embodiment of a fluorescent lamp of the present invention;
FIG. 3 schematically shows in an enlarged cross sectional view, the detail A in FIG. 1 depicting another example embodiment of a fluorescent lamp of the present invention;
FIG. 4 schematically represents embodiments of the methods of the present invention for making a light source that includes a substantially transparent envelope;
FIG. 5 is a table presenting formulation data illustrative of an embodiment of the coating of the present invention;
FIG. 6 is a graph presenting lumen maintenance data illustrative of an embodiment of a lamp of the present invention;
FIG. 7 is a table presenting formulation data illustrative of an embodiment of the coating of the present invention;
FIG. 8 is a table presenting formulation data illustrative of an embodiment of the coating of the present invention versus formulation data illustrative of a conventional phosphor coating;
FIG. 9 is a graph presenting lumen maintenance data illustrative of an embodiment of the coating of the present invention compared to data illustrative of a conventional phosphor coating;
FIG. 10 is a boxplot presenting mercury retention data illustrative of an embodiment of the coating of the present invention compared to data illustrative of a conventional phosphor coating;
FIG. 11 is a table presenting formulation data illustrative of an embodiment of the coating of the present invention;
FIG. 12 is a table presenting formulation data illustrative of an embodiment of the coating of the present invention versus data illustrative of conventional phosphor coatings;
FIG. 13 is a graph presenting lumen maintenance data illustrative of an embodiment of the coating of the present invention compared to data illustrative of conventional phosphor coatings;
FIG. 14 is a boxplot presenting mercury retention data illustrative of an embodiment of the coating of the present invention compared to data illustrative of conventional phosphor coatings;
FIG. 15 is a table presenting data illustrative of an embodiment of the coating of the present invention;
FIG. 16 is a graph presenting data illustrative of an embodiment of the coating of the present invention;
FIG. 17 is a table presenting data illustrative of an embodiment of the coating of the present invention; and
FIG. 18 is a table presenting data illustrative of an embodiment of the coating of the present invention.

### DETAILED DESCRIPTION

Reference will now be made in detail to embodiments of the invention, one or more examples of which are illustrated in the accompanying drawings. As used herein, a "fluorescent lamp" is any mercury vapor discharge fluorescent lamp as known in the art, including fluorescent lamps wherein the means for providing a discharge includes having electrodes, and electrode-less fluorescent lamps wherein the means for providing a discharge includes a radio transmitter adapted to excite mercury vapor atoms via transmission of an electromagnetic signal.

Also as used herein, a "T8 lamp" is a fluorescent lamp as known in the art, desirably linear in the shape of a right cylinder, desirably nominally 48 inches in length, and having a nominal outer diameter of 1 inch (eight times 1/8 inch, which is where the "8" in "T8" derives). However, the T8 fluorescent lamp can be nominally 2, 3, 6 or 8 feet long, or some other length. Moreover, the method and apparatus disclosed herein is applicable to other lamp sizes and loadings, ranging from T12 to T4 in diameter, and including compact fluorescent lamp (CFL) types as well.

As noted, one embodiment of the present disclosure is directed to a mercury vapor discharge lamp, the lamp comprising, a light-transmissive envelope having an inner surface defining an interior volume; a discharge generator; an ionizable fill gas comprising mercury and an inert gas sealed inside the envelope; and a phosphor coating layer disposed on at least a portion of the inner surface of the envelope. The phosphor coating layer comprises a phosphor composition comprising a colloidal alumina, particles comprising at least one rare earth compound, and phosphor particles. The particles comprising at least one rare earth compound are present in the phosphor composition in an amount from about 0.5 percent to about 5 percent of the weight of the phosphor particles. The phosphor particles comprise one or more of zinc silicate, strontium green-blue, strontium red, SECA, CBT, CBM, BAM, BAMn, magnesium germanate, SAE, SEB, yttrium vanadate, or combinations of two or more of the foregoing.

In embodiments of the invention, the particles comprising at least one rare earth compound are selected to increase at least one of lumen output or lumen maintenance for the lamp, as compared with the same mercury vapor discharge lamp comprising the same phosphor composition without colloidal alumina and without said particles comprising at least one rare earth compound. More preferably, one will select a rare earth compound which can increase both the lumen output as well as the lumen maintenance, as compared to the same lamp without the rare earth compound.

Typically, as used herein, the term "rare earth compound" will usually refer to a substance which is non-luminescent or are non-activated, e.g., which does not luminesce or fluoresce under UV light. Therefore, the definition of the term "rare earth compound" does not include any lamp phosphors.

In certain embodiments, the rare earth compound may comprise an oxide of at least one rare earth element. For purposes of this disclosure, La and Y are considered to be rare earth elements. In certain embodiments, the rare earth compound may comprise a compound of at least one of yttrium or lanthanum, such as yttrium oxide and/or lanthanum oxide.

The colloidal alumina will be any alumina which comprises particles of colloidal size, e.g., on the order of nanometer size. In certain embodiments, the mean particle size of the colloidal alumina is from about 30 nm to about 100 nm. However, other sizes are possible within the meaning of "
.One embodiment of the present invention includes an efficient, low cost method using colloidal alumina and particles of a rare earth compound co-mixed (co-dispersed) with certain phosphor particles during the coating preparation and application process for improving lumen maintenance of fluorescent lamps made using such certain phosphors, wherein the certain phosphor particles are selected from the group consisting of: zinc silicate; strontium green-blue; strontium red; SECA; CBT; CBM; BAM; BAMn; magnesium germanate; SAE; SEB; yttrium vanadate and combinations of two or more of the foregoing, wherein the particles of the rare earth compound constitute only several (e.g., about 0.1 to about 10) percent of the phosphor weight but the resulting lumen maintenance is similar to the lumen maintenance achieved with other more durable phosphors currently in use for manufacturing fluorescent lamps.

An embodiment of the present invention includes an efficient, low cost method using colloidal alumina and yttria particles co-mixed (co-dispersed) with certain phosphor particles during the coating preparation and application process for improving lumen maintenance of fluorescent lamps made using such certain phosphors, wherein the yttria particles constitute only several percent of the phosphor weight but the resulting lumen maintenance is similar to the lumen maintenance achieved with other more durable phosphors currently in use for manufacturing fluorescent lamps.

One embodiment of the present invention includes an efficient, low cost method using colloidal alumina and lanthanum oxide particles co-mixed (co-dispersed) with certain phosphor particles during the coating preparation and application process for improving lumen maintenance of fluorescent lamps made using such certain phosphors, wherein the lanthanum oxide particles constitute only several percent of the phosphor weight but the resulting lumen maintenance is similar to the lumen maintenance achieved with other more durable phosphors currently in use for manufacturing fluorescent lamps.

An embodiment of the present invention includes an efficient, low cost method using colloidal alumina and particles of a rare earth compound co-mixed (co-dispersed) with certain phosphor particles during the coating preparation and application process for improving lumen maintenance of fluorescent lamps made using such certain phosphor particles, wherein the particles of the rare earth compound constitute only several (e.g., about 0.1 to about 10) percent of the phosphor weight but the resulting lumen maintenance is similar to the lumen maintenance achieved with other phosphors currently in use for manufacturing fluorescent lamps.

Another embodiment of the present invention includes an efficient, low cost method using colloidal alumina, for example fumed alumina, and yttria particles co-mixed (co-dispersed) with certain phosphor particles during the coating preparation and application process for improving lumen maintenance of lamps made using such certain phosphor particles, with the improvement resulting in performance which is similar to other phosphors currently in use for manufacturing fluorescent lamps.

A further embodiment of the present invention also may include an efficient, low cost method using colloidal alumina and lanthanum oxide co-mixed (co-dispersed) with certain phosphor particles during the coating preparation and application process for improving lumen maintenance of lamps made using such certain phosphor particles, with the improvement resulting in performance which is similar to other phosphors currently in use for manufacturing fluorescent lamps.

In yet another embodiment of the present invention, a fluorescent lamp includes a coating of certain phosphors co-mixed (co-dispersed) with colloidal alumina and particles of a rare earth compound wherein the particles of the rare earth compound constitute only several percent of the phosphor weight and wherein the certain phosphors are selected from the group consisting of: zinc silicate; strontium green; strontium blue; strontium red; SECA; CBT; CBM; BAM; BAMn; magnesium germanate; SAE; SEB; yttrium vanadate and combinations of two or more of the foregoing.

In yet another embodiment of the present invention, a fluorescent lamp includes a coating of certain phosphors co-mixed (co-dispersed) with colloidal alumina and yttria particles wherein the yttria particles constitute only several (e.g., about 0.1 to about 10) percent of the phosphor weight.

In yet another embodiment of the present invention, a fluorescent lamp includes a coating of certain phosphors co-mixed (co-dispersed) with colloidal alumina and lanthanum oxide particles wherein the lanthanum oxide particles constitute only several percent of the phosphor weight.

In yet another embodiment of the present invention, a fluorescent lamp includes a coating of zinc silicate phosphor co-mixed (co-dispersed) with colloidal alumina and particles of a rare earth compound wherein the particles of the rare earth compound constitute only several percent of the phosphor weight.

In an additional embodiment of the present invention, a fluorescent lamp includes a coating of zinc silicate phosphor co-mixed (co-dispersed) with colloidal alumina and yttria particles wherein the yttria particles constitute only several percent of the phosphor weight.

In still another embodiment of the present invention, a fluorescent lamp includes a coating of zinc silicate phosphor co-mixed (co-dispersed) with colloidal alumina and lanthanum oxide particles wherein the lanthanum oxide particles constitute only several percent of the phosphor weight.

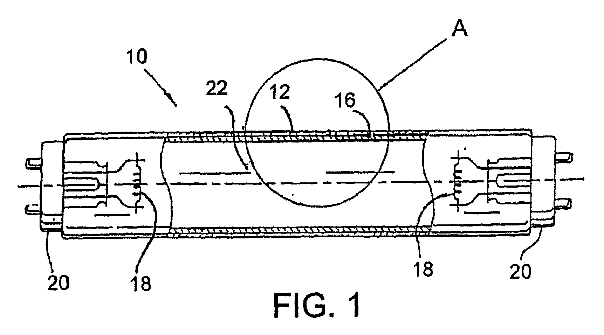

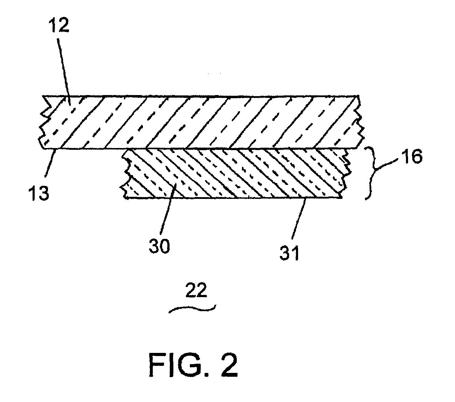

Referring to FIG. 1, a mercury vapor discharge fluorescent lamp 10 according to a first preferred embodiment of the present invention is schematically depicted with portions cut away and portions shown in cross section. Though the lamp in FIG. 1 is linear in the shape of a right cylinder, the invention is not limited to linear lamps and may be applied to fluorescent lamps of any shape. The fluorescent lamp 10 has a light-transmissive glass tube or envelope 12, which has a cross-section that is circular when taken normal to the longitudinal axis of the lamp 10. As schematically depicted in FIG. 2, which shows an enlarged cross sectional view of the portion of the drawing in FIG. 1 identified by the balloon designated A, the glass envelope 12 has an inner surface 13 that is cylindrical and defines an interior volume of the glass envelope 12.

As schematically shown in FIG. 1, the lamp 10 is hermetically sealed at each of the opposite ends of the glass envelope 12 by a base 20 attached at one of the two spaced apart opposite ends of the glass envelope 12 and another base 20 attached at the other one of the two spaced apart opposite ends of the glass envelope 12. In embodiments of lamps such as that in FIG. 1 a discharge generator is included which in this embodiment comprises electrodes within a lamp envelope. Thus, an electrode structure 18 is respectively mounted on each of the bases 20 and is disposed in the interior volume of the envelope 12. A discharge-sustaining fill gas 22 of mercury and an inert gas is sealed in the interior volume inside the glass tube 12. The inert gas desirably is argon or a mixture of argon and krypton, but could be some other inert gas or mixture of inert gases. The inert gas and a small quantity of mercury vapor provide the low vapor pressure manner of operation. Preferably, the mercury vapor has a pressure during lamp operation in the range of 4 to 6 millitorr.

As schematically shown in FIG. 1, the fluorescent lamp 10 has a coating layer 16. As schematically shown in FIG. 2 for example, the coating layer 16 desirably is formed on a substantial portion of the inner surface 13 of the envelope 12 and desirably covers essentially the entire inner surface 13. The coating layer 16 can include one or more distinct layers of material and/or compositions of material. As schematically shown in FIG. 2, one example embodiment of the coating layer 16 includes a phosphor coating layer 30 that includes phosphor particles co-dispersed with particles of a rare earth compound, wherein the particles of the rare earth compound constitute in the range of from about 0.5 percent to about 5 percent of the weight of the phosphor particles. The phosphor particles may include one or more of the following phosphors: zinc silicate [e.g., Zn₂SiO₄:Mn]; strontium green-blue [e.g., Sr₅(PO₄)₃(F,Cl) : Sb³⁺, Mn²⁺]; strontium red [e.g, Sr₃(PO₄)₂ : Sn²⁺]; SECA [e.g., Sr₅-_{x-y}Baₓ Cay(PO₄)₃Cl:Eu²⁺]; CBT [e.g, GdMgB₅O₁₀ : Ce³⁺, Tb³⁺]; CBM [e.g., GdMgB₅O₁₀ : Ce³⁺, Mn³⁺]; BAM [e.g., BaMg₂Al₁₆O₂₇ : Eu²⁺]; BAMn_[e.g., BaMg₂Al₁₆O₂₇:Eu²⁺;Mn²⁺]; magnesium germanate [e.g., 3.5(MgO)*0.5(MgF₂)*GeO₂:Mn⁴⁺]; SAE [e.g., Sr₄Al₁₄O₂₅ Eu²⁺]; SEB [e.g., SrB₄O₇ : Eu²⁺] and yttrium vanadate [e.g., Y(P,V)O₄ : Eu³⁺]. As used herein, "strontium green-blue" may refer to phosphors commonly known as strontium green, or strontium blue, or combinations thereof. It may also refer to any green, blue, or green-blue emitting phosphor having the formula Sr₅(PO₄)₃(F,Cl) : Sb³⁺, Mn²⁺; the precise color between green and blue may be a function of the content of Sb, Mn, F, and Cl, as would be understood by the person of ordinary skill in the art. The formulae shown in brackets after the name or abbreviation of the phosphor refer to one possible chemical formula; there may be other possible formulae for each.

As schematically shown in FIG. 2, the phosphor coating layer 30 in accordance with a desirable example embodiment of the present invention further includes a colloidal alumina.

In the example embodiment schematically depicted in FIG. 2, the coating layer 16 can be formed entirely of the phosphor coating layer 30 that comprises a colloidal alumina and particles of a rare earth compound co-dispersed with zinc silicate particles, wherein the particles of the rare earth compound constitute in the range of 0.5 percent to 5 percent of the weight of the zinc silicate particles.

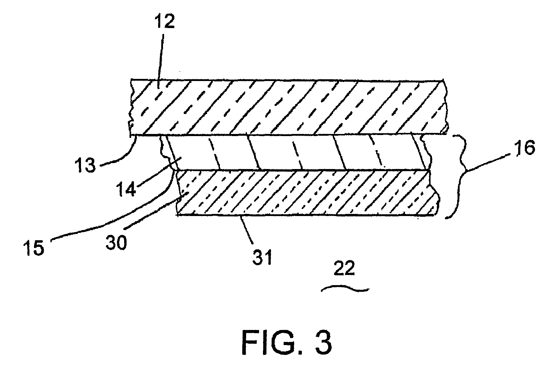

In the example embodiment schematically depicted in FIG. 3, the coating layer 16 includes in addition to a phosphor coating layer 30, a barrier layer 14 that desirably is disposed between the inner surface 13 of the envelope 12 and the phosphor coating layer 30. The barrier layer 14 desirably comprises particles that make up the principal component of the barrier layer 14. In this embodiment, the barrier layer 14 is coated adjacent, preferably directly on, the inner surface 13 of the glass envelope 12, and the phosphor coating layer 30 is coated adjacent, preferably directly on, the inner surface 15 of the barrier layer 14. Thus, the barrier layer 14 desirably is disposed between the inner surface 13 of the envelope 12 and the phosphor coating layer 30. In certain embodiments , the barrier layer 14 is an alumina barrier, wherein the particles of the barrier layer 14 are alumina particles. The barrier layer 14 may comprise a mixture of substantially equal proportions of alpha- and gamma-alumina particles. Alternatively, the barrier layer 14 may comprise one or more of silica, hafnia, zirconia, vanadia, or niobia.

In accordance with an example method embodiment of the present invention, a phosphor composition layer 30, which desirably contains zinc silicate green phosphor for example, is prepared using a water vehicle and polymer thickener in any effective manner, including some known and conventional manners. Colloidal alumina, for example fumed alumina, also is dispersed uniformly in the water/polymer solution used to prepare the phosphor coating layer 30. Additionally, yttrium salt such as yttrium acetate or nitrate is dissolved into the water and polymer solution that contains the dispersed alumina and phosphor particles. Alumina may be added as a small particle solid phase, which is well mixed with the yttrium salt solution. As used herein, "colloidal alumina" particles preferably have a mean particle size of from about 15 nm to about 800 nm, preferably about 20 nm to about 600 nm, for example, from about 20 nm to about 400 nm, or from about 22 nm to about 300 nm, or from about 25 nm to about 200 nm, or from about 30 nm to about 100 nm. The resultant co-mixture, optionally in admixture with other additives, , when coated onto the inner surface 13 of fluorescent lamp tubing 12 in , will provide unexpectedly good lumen output and lumen maintenance compared with known phosphor coating designs that lack the alumina-yttria blend described herein. The alumina-yttria blend described herein is also particularly effective with one or more of the following phosphors described above: Strontium green; Strontium blue; Strontium red; SECA; CBT; CBM ; BAM; BAMn; Magnesium germanate; SAE; and SEB.

Other additives which may be included in the co-mixture include one or more of dispersants or surfactants, as are well understood in the industry to regulate the suspension's physical properties. For use as thickeners, nonionic water soluble polymeric thickeners such as polyethylene oxide may be desirable. For use as dispersants, nonionic dispersants may be desirable. While yttria is the preferred choice for the rare earth compound, the rare earth additive need not be restricted to yttria. Lanthanum oxide and other rare earth compounds (such as other rare earth oxides) will provide similar results. All salts are converted to oxides during the lamp lehring or baking step, which is a usual part of the fluorescent lamp making process.

In one example embodiment, the phosphor coating layer 30 may be applied from a slurry/suspension. Such slurry/suspension may comprise water (desirably deionized water), polyethylene oxide thickening polymer, dispersed colloidal alumina, a precursor to a rare earth compound such as yttrium acetate, and phosphor particles such as zinc silicate..

In this embodiment, the following components are in the slurry/suspension, with their relative component weight as shown in Table I (pbw mean parts by weight):

**Table I**

| | |
|---|---|
| zinc silicate | 100 pbw |
| colloidal alumina sol | 23.33 pbw |
| "YA" yttrium acetate solution | 51.95 pbw |

The colloidal alumina sol was provided as a fluid containing 30% by weight colloidal alumina therein. Thus, the "pbw of colloidal alumina sol" shown above refers to the weight of the sol fluid. "YA" refers to a 4.1 % yttrium acetate solution. The "pbw of YA" shown above refers to the weight of solution. A 4.1% yttrium acetate solution may be prepared by dissolving high purity yttrium oxide powder in an aqueous acetic acid solution. As noted above, the yttrium salt solution will be converted to oxides during the lamp lehring or baking step, which is a usual part of the fluorescent lamp making process. The slurry also comprises sufficient additional water to make a slurry which may be effectively coated on a lamp envelope. Adjustments of water content in a slurry would be well within the skill of persons of ordinary skill in the art. Finally, the slurry/suspension also comprises the polyethylene oxide thickener at a level of 11 pbw, and other components such as dispersant. The slurry is applied to the envelope in such a manner as to afford a coating level of 4.44 mg of phosphor coating layer 30, per cm² of envelope area.

The prepared slurry/suspension noted above may be used to form the phosphor coating layer 30 by application to the inner surface 13 of glass envelope 12 (or to a barrier layer 14) by any effective means, such as many known coating means. Once applied, the phosphor composition layer 30 can be dried via forced air convection. After being dried, the phosphor composition layer 30 is baked at an elevated temperature, e.g. at least 400 °C, 500 °C, or 600 °C, for about 0.5 to 10 minutes to burn out the organics. As the water is vaporized from the slurry/suspension, the concentration of the dissolved yttrium salt approaches saturation. Yttrium salts are highly soluble in water. Hence, the yttrium salt concentration rises uniformly throughout the phosphor coating layer 30 as the water evaporates such that once saturation is achieved and the salt begins to crystallize, a highly uniform dispersion of yttrium salt crystals is formed, as well as a thin yttrium salt film over all of the available surfaces. The film forms over the surfaces of the glass envelope 12, the surfaces of the phosphor particles and the surfaces of the individual alumina particles. Under baking conditions, the yttrium salt is oxidized to yttrium oxide (or yttria), thus providing the dispersion of rare earth compound (in this case, yttria) in this embodiment of the phosphor composition layer 30 of the present invention.

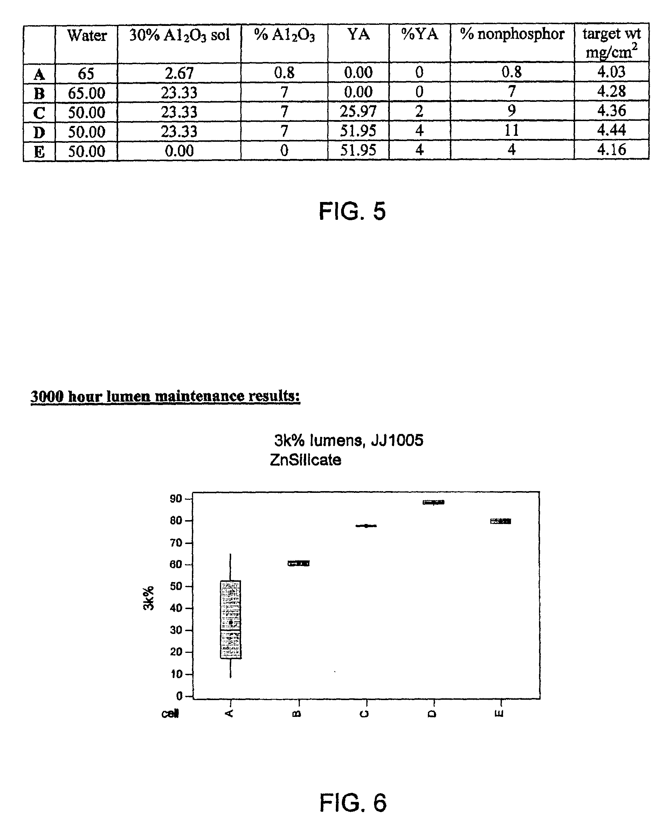

Referring to FIG. 5, lamps were made with test coatings were made from water, polyethylene oxide thickening polymer, dispersed colloidal alumina, yttrium acetate, and zinc silicate phosphor in proportions shown in Fig. 5, wherein YA is a 4.1% yttrium acetate solution prepared by dissolving high purity yttrium oxide powder in an aqueous acetic acid solution. Each combination is based on mixing with 100 grams of zinc silicate phosphor. The "non-phosphor" components refers to the thickening polymer. Note that lamps with five different test coatings were prepared, A to E. Coatings A and B contained no rare earth compound. Coating E contained no colloidal alumina. Only coatings C and D contained both the rare earth compound and colloidal alumina. However, coating C had a lower ratio of yttrium to phosphor than did coating D. After 3,000 hours of testing fluorescent tubes 10 formed with the test coatings identified A, B, C, D and E in FIG. 5 yielded the following results presented in the Graph of FIG. 6.

As can be seen in the Graph of FIG. 6, the combination of yttrium acetate and alumina (sample D) that forms an embodiment of the phosphor coating layer 30 of the present invention provides excellent lumen maintenance compared with the traditional coatings (cells A or B) of zinc silicate. Use of only yttrium acetate (sample E) gives better results than the traditional designs (cells A or B), but almost 10% lower maintenance compared with the blend (sample D) that forms an embodiment of the phosphor coating layer 30 of the present invention. Note that in the graph of FIG. 6, "3k% lumens" refers to the percent of lumen output which is observed after 3000 hours of burn time of the lamp, relative to initial lumen output.

The results presented in FIGs. 5 and 6 demonstrate the enhanced performance achievable with the novel coating formulation of embodiments of the present invention. As apparent from the additional examples presented hereafter, similar results have been achieved for other phosphors that also can experience difficult lumen maintenance issues, including strontium based blue phosphors, strontium based red phosphors and strontium based green phosphors. Thus, in place of zinc silicate phosphor, one may substitute certain other phosphors provided they are selected from the group consisting of strontium green; strontium blue; strontium red; SECA; CBT; CBM; BAM; BAMn; magnesium germanate; SAE; SEB; yttrium vanadate and combinations of two or more of the foregoing. Also included for replacements of zinc silicate phosphor are blended phosphor systems that include one or more of the foregoing with zinc silicate phosphor. These certain phosphors, which are identified above in more detail, can experience excessive brightness loss when used in conventional fluorescent lamps, and the present invention reduces the loss in brightness that otherwise would occur.

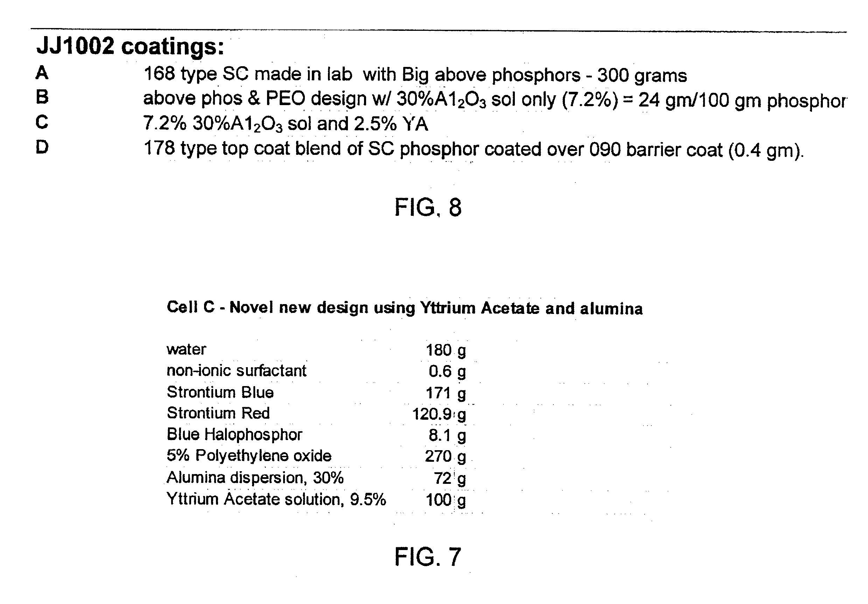

Referring to the chart in FIG. 7, a test coating designated "Cell C" (not to be confused with coating C of FIG. 5 and FIG. 6) was made in accordance with an embodiment of the present invention from water, polyethylene oxide thickening polymer, dispersed colloidal alumina, yttrium acetate, and a phosphor blend called Chroma 50. The Chroma 50 blend comprises strontium red, strontium blue, and blue halo (i.e., a blue halophosphor). Proportions of each are shown in the chart presented in FIG. 7, wherein YA is a 9.5% yttrium acetate solution prepared by dissolving high purity yttrium oxide powder in an aqueous acetic acid solution. Note that 300 grams of the Chroma 50 phosphor blend was present. In the test coating for the sample Cell C, the 9.5% yttrium acetate solution yields a coating with 2.5% yttrium acetate.

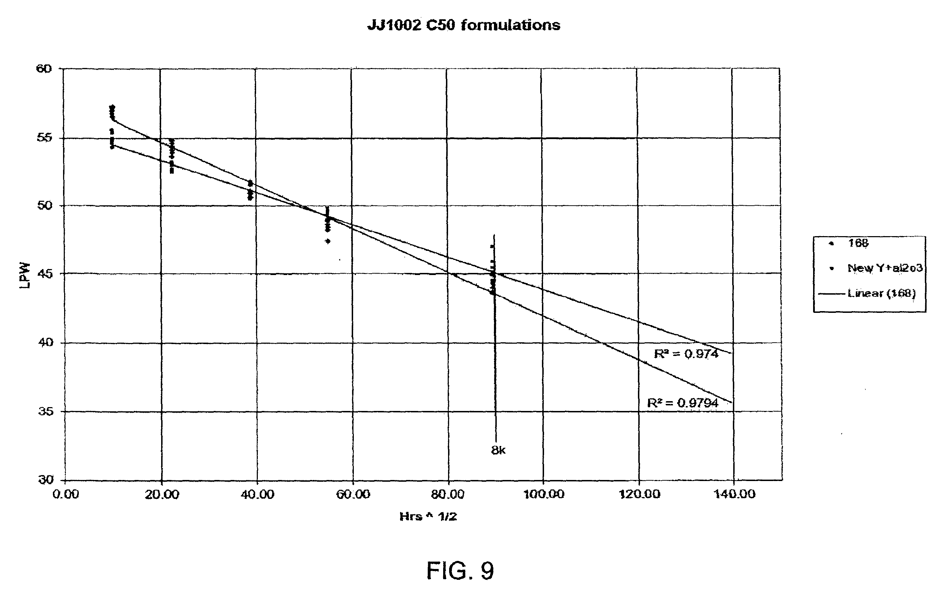

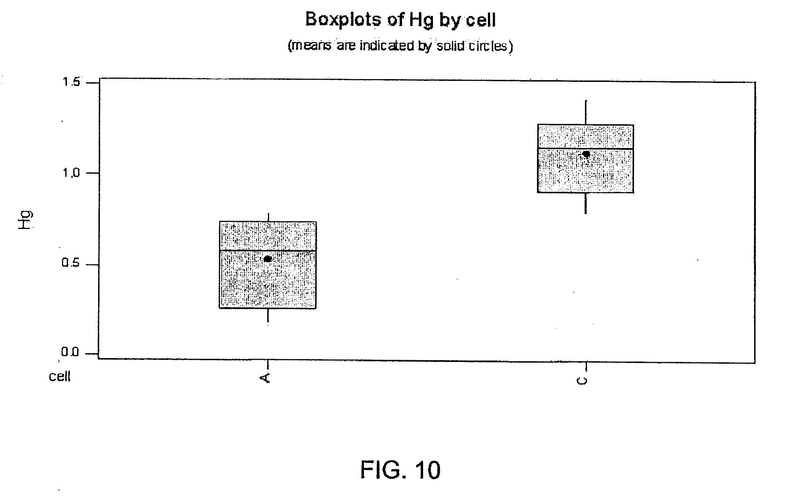

We will now correlate the lamp made using the test coating termed "Cell C" with other lamps using different test coatings.
Cell A: 300 g of the Chroma 50 phosphor blend with an acrylic polymer, but without any yttrium salts or alumina. This is referred to as a "168 type" blend in FIG. 9.
Cell B: Same components as Cell A but including PEO thickener (instead of acrylic) as well as including colloidal alumina (provided as a 30% sol) in an amount of 24 g alumina per 100 g of phosphor blend. The test coating identified as Cell B in FIGs. 9 - 10 lacks yttrium acetate but is otherwise identical to the coating of Cell C.
Cell C: Components as shown in FIG. 7
Cell D: The test coating identified as Cell D in FIGs. 9 - 10 is a comparative double coat formulation without any yttrium salts. It used Chroma 50 phosphor and an acrylic polymer. The phosphor-containing coating was disposed upon a barrier layer. The barrier layer of the test coating identified as Cell D was prepared from a slurry including water, polyelectrolyte dispersant (ammonium polyacrylate, 2% to 4% by alumina weight), ammonia, aluminum oxide, thickener (high molecular weight acrylic polymer, water soluble, 2% to 4% by alumina weight), and nonionic surfactant (nonylphenolethoxylate type, 0.05% by alumina weight). The phosphor layer of the test coating identified as Cell D was prepared from a slurry including water, colloidal alumina (3% to 5% by phosphor weight), surfactant (nonionic, typically 0.5% by phosphor weight), Chroma 50 phosphor and a binder or thickener (polyethylene oxide, 5% by phosphor weight). This kind of phosphor layer is commonly referred to as a "178 type top coat blend of SC phosphor". The kind of barrier coating in Cell D is commonly referred to as "090 barrier coat". This description of what constitutes Cells A-D immediately above, is merely the same data as shown in FIG. 8, except with more clarity. Note again that Cells A-D referred to here and FIG. 9 and 10 are not the same as "A-E" of FIG. 5.

Testing fluorescent tubes formed with the test coatings identified as Cell A, Cell B, Cell C and Cell D for 8,000 hours yielded the lumen maintenance results presented in the Graph of FIG. 9 and the mercury retention results presented in the Graph of FIG. 10. Note that in FIG. 9, the x-axis is the square root of burning time expressed as h^{1/2}; and the y-axis is LPW, the lumens per watt. Cell A in the graphs in FIGs. 9 and 10 was a conventional ("168 type") coating that contained about one percent weight alumina and no yttrium at all. Unfortunately, mercury starvation caused the coatings of cells B and D to fail, leaving full 8,000 hour test results only from cells A and C. Cell C made in accordance with an embodiment of the present invention demonstrated improved lumen maintenance in FIG. 9 over the conventional coating (Cell A) and reduced Hg loss relative to the conventional coating (Cell A) in FIG. 10. Based on these results, it is believed that this new coating design, of which cell C is an example, should provide similar results for coatings (including those used on higher color correlated temperature (CCT) standard formulations which tend toward more blue phosphors) that use the same phosphors as Chroma 50, even though the ratio of the strontium blue, strontium red, and strontium green components will vary for the different colors. Based on these results, it also is believed that the benefit of addition of a rare earth compound (such as yttrium oxide) should be similar for all coatings that use strontium phosphors and for coatings that use SECA, since SECA can be used in lieu of strontium blue.

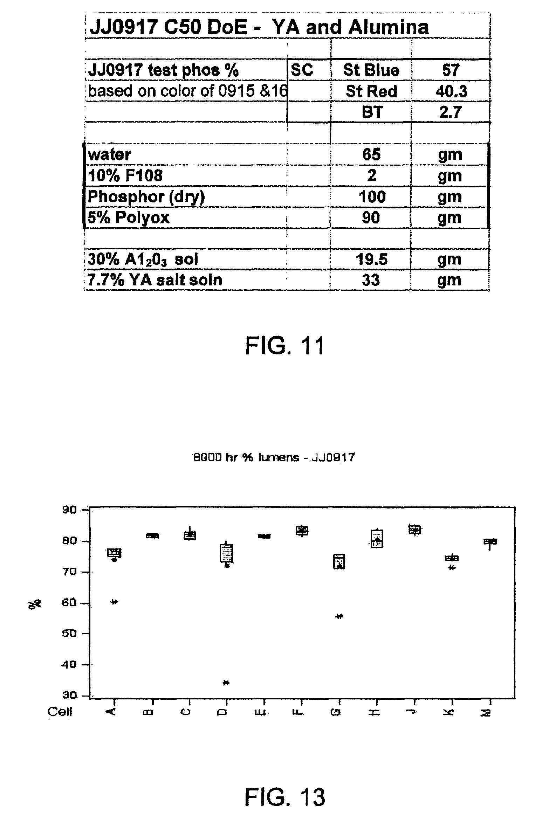

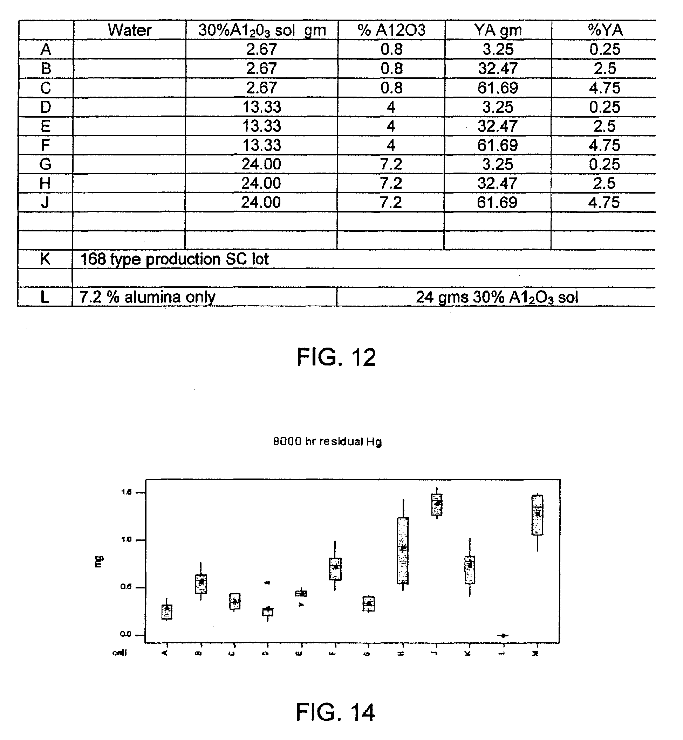

Referring to the chart in FIG. 11, a test coating designated Cell J in FIGs. 12 - 14 was made in accordance with an embodiment of the present invention from water, polyethylene oxide thickening polymer, dispersed colloidal alumina, yttrium acetate, and a phosphor blend (called Chroma 50) that contains strontium red, strontium blue, and blue halo in proportions shown in the chart presented in FIG. 11, wherein YA is a 7.7% yttrium acetate salt solution prepared by dissolving high purity yttrium oxide powder in an aqueous acetic acid solution and F108 is a block copolymer of ethylene oxide and propylene oxide that serves as a mild surfactant with a fairly high Hydrophile to Lipophile Balance (HLB) factor.

For clarity's sake the same data as in FIG. 11 is reproduced in Table II below:

**Table II**

| Cell J: Uses Chroma 50 blend and YA and alumina | Chroma 50 in Cell J was 57% strontium blue, 40.3% strontium red, and 2.7% blue halo. |
|---|---|
| **Component in slurry/suspension used to form Cell J** | **mass (in grams)** |
| Chroma 50 Phosphor blend (dry basis) | 100 |
| water | 65 |
| Dispersant (F108), as 10% solution | 2 |
| Thickener (Polyox), as 5% solution | 90 |
| Colloidal alumina, as 30% Al2O3 sol | 19.5 |
| Rare earth, as 7.7% yttrium acetate solution | 33 |

Now, we turn to FIG. 12, which reports further test lamps denoted as Cells A-H and J-L. Please note that this naming scheme (e.g., "Cell A") again bears no relationship to any previous naming scheme. The Cells from FIG. 12 were tested for 800 h lumen maintenance in FIG. 13, and mercury retention in FIG. 14. Each combination described in Cells A - H and J - L in FIG. 12 is based on mixing with 100 grams of the Chroma 50 phosphor. Cell K contained about one percent weight alumina and no yttrium at all. Testing fluorescent tubes 10 formed with the test coatings identified A - H and J - L in FIG. 12 for 8,000 hours yielded the lumen maintenance results presented in the Graph of FIG. 13 and the mercury retention results presented in the Graph of FIG. 14. The testing of the test coatings 16 identified A - H and J - L in FIG. 12 demonstrated that better results were achieved when the YA and alumina were combined. Cell K in the chart in FIG. 12 and the graphs in FIGs. 13 and 14 was a conventional coating 16 that contained about one percent weight alumina and no yttrium at all. Cell J made in accordance with an embodiment of the present invention demonstrated improved lumen maintenance in FIG. 13 over the conventional coating (Cell K) and reduced Hg loss with life over the conventional coating (Cell K) in FIG. 14.

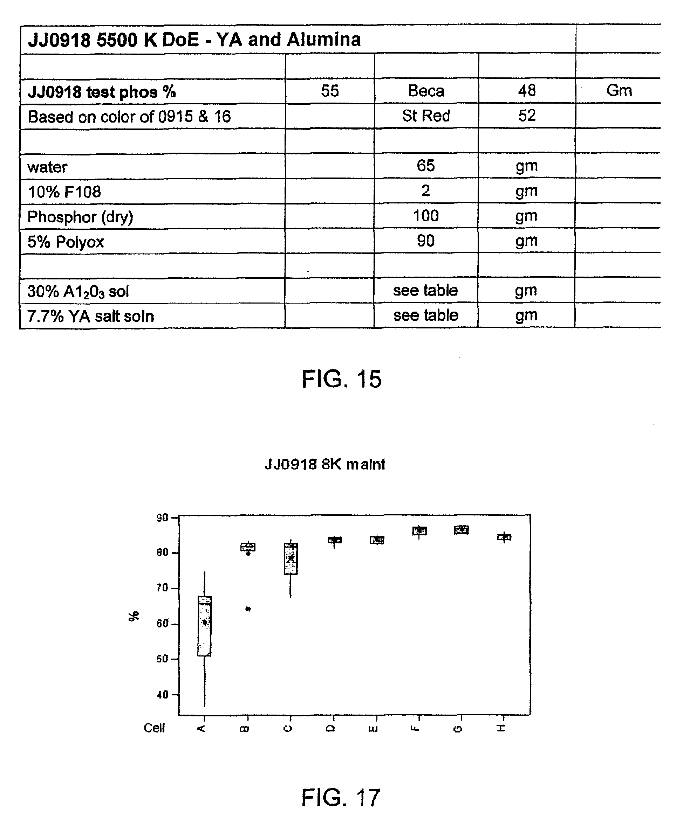

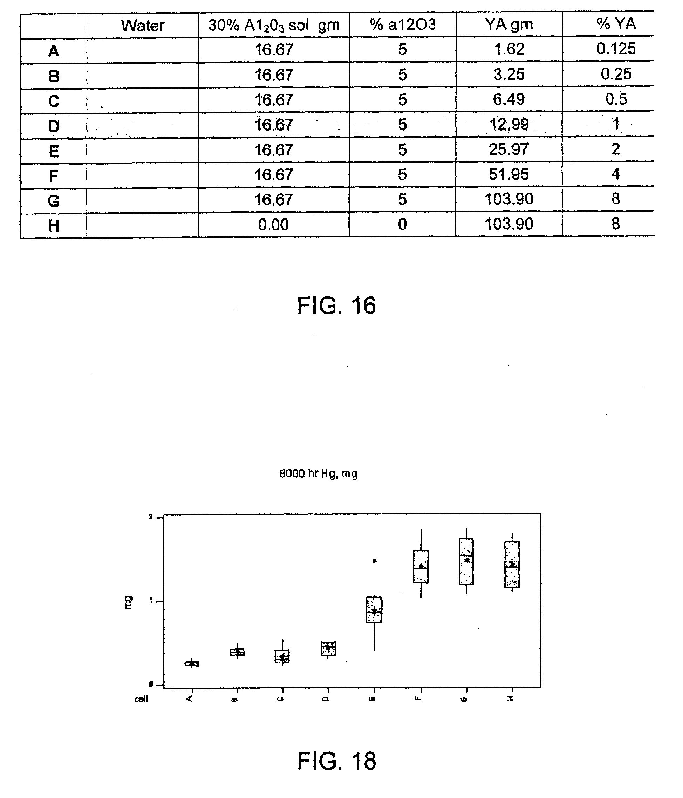

Referring to the chart in FIG. 15, a test coating 16 designated Cell G in FIGs. 16 - 18 was made in accordance with an embodiment of the present invention from water, polyethylene oxide thickening polymer, dispersed colloidal alumina, yttrium acetate, and a phosphor blend that contains strontium red and BECA in proportions shown in the chart presented in FIG. 15, wherein YA is a 7.7% yttrium acetate salt solution prepared by dissolving high purity yttrium oxide powder in an aqueous acetic acid solution. Each combination described in Cells A - H in FIG. 16 is based on mixing with 100 grams of the phosphor blend that contains strontium red and BECA. Cell H contained no alumina with the same amount of yttrium as Cell G. Cell A contained almost no yttrium with the same amount of alumina as Cell G. Testing fluorescent tubes 10 formed with the test coatings 16 identified A - H in FIG. 16 for 8,000 hours yielded the lumen maintenance results presented in the Graph of FIG. 17 and the mercury retention results presented in the Graph of FIG. 18. Cell G made in accordance with an embodiment of the present invention demonstrated improved lumen maintenance in FIG. 17 over the other coatings (Cells A - F and H) and reduced Hg loss with life over the other coatings (Cells A - F and H) in FIG. 18.

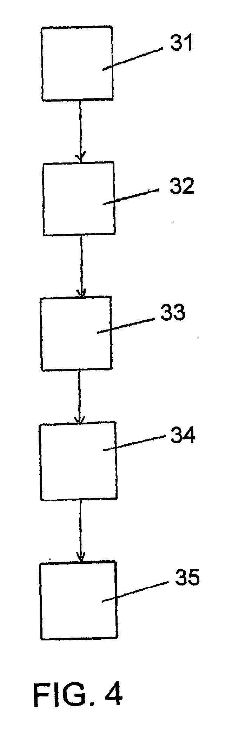

In accordance with embodiments of the present invention, methods are provided for making a light source that includes a substantially transparent, hollow envelope that has an inner surface coated with a layer including a phosphor composition. As schematically represented in FIG. 4, such methods desirably include a step 31 that calls for providing a coating on the inner surface of the envelope, the coating including a phosphor composition layer that includes colloidal alumina and phosphor particles selected from the group consisting of zinc silicate; strontium green-blue; strontium red; SECA; CBT; CBM; BAM; BAMn; magnesium germanate; SAE; SEB; yttrium vanadate and combinations of two or more of the foregoing. In this coating, the colloidal alumina and phosphor particles are co-dispersed with particles that include at least one rare earth compound, wherein the rare earth compound particles constitute in the range of 0.5 to 5 percent of the weight of the phosphor particles. Thereafter, as schematically represented in FIG. 4, the methods desirably call for the step 32 of installing in the envelope 12 a plasma discharge generator from the mercury and the inert gas that is to be confined in the envelope 12. As schematically represented in FIG. 4, the methods desirably call for the step 33 of evacuating the envelope 12. As schematically represented in FIG. 4, once the envelope 12 is evacuated, the methods desirably call for the step 34 of adding into the evacuated envelope 12 and confining within the envelope 4, a gas 22 that includes a first amount of mercury and a second amount of an inert gas to produce the light source. As schematically represented in FIG. 4, the methods desirably call for the step 35 of sealing the envelope 12 to produce the light source 10.

As explained more fully below, the phosphor composition coating layer 30 described above can be applied directly to lamp glass tubing 12, or in conjunction with barrier coatings that are well known in the fluorescent lamp making art.

The detailed description uses numerical and letter designations to refer to features in the drawings. Like or similar designations in the drawings and description have been used to refer to like or similar parts of embodiments of the invention.

Each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims and their equivalents.

It is to be understood that the ranges and limits mentioned herein include all sub-ranges located within the prescribed limits, inclusive of the limits themselves unless otherwise stated. For instance, a range from 100 to 200 also includes all possible sub-ranges, examples of which are from 100 to 150, 170 to 190, 153 to 162, 145.3 to 149.6, and 187 to 200. Further, a limit of up to 7 also includes a limit of up to 5, up to 3, and up to 4.5, as well as all sub-ranges within the limit, such as from about 0 to 5, which includes 0 and includes 5 and from 5.2 to 7, which includes 5.2 and includes 7.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal languages of the claims.

## Claims

1. A mercury vapor discharge lamp (10), comprising:
a light-transmissive envelope (12) having an inner surface defining an interior volume;
a discharge generator (18);
an ionizable fill gas (22) comprising mercury and an inert gas sealed inside the envelope; and
a phosphor coating layer (30) disposed on at least a portion of the inner surface of the envelope (12);
wherein the phosphor coating layer (30) comprises a phosphor composition comprising a colloidal alumina, particles comprising at least one rare earth compound, and phosphor particles;
wherein the particles comprising at least one rare earth compound are present in the phosphor composition in an amount from about 0.5 percent to about 5 percent of the weight of the phosphor particles; and
wherein the phosphor particles comprise one or more of zinc silicate, strontium green-blue, strontium red, SECA, CBT, CBM, BAM, BAMn, magnesium germanate, SAE, SEB, yttrium vanadate, or combinations of two or more of the foregoing.

2. The lamp of claim 1, wherein the particles comprising at least one rare earth compound are selected to increase at least one of lumen output or lumen maintenance for the lamp (10), as compared with the same mercury vapor discharge lamp comprising the same phosphor composition without colloidal alumina and without said particles comprising at least one rare earth compound.

3. The lamp of claim 1 or claim 2, wherein the at least one rare earth compound is non-luminescent or are non-activated.

4. The lamp of claim 1, 2 or 3, wherein the at least one rare earth compound comprises an oxide of at least one rare earth element.

5. The lamp of claim 1, 2, 3 or 4, wherein the at least one rare earth compound comprises a compound of at least one of yttrium or lanthanum.

6. The lamp of claim 5, wherein the at least one rare earth compound comprises a yttrium compound.

7. The lamp of any preceding claim, wherein the mean particle size of the colloidal alumina is from about 30 nm to about 100 nm.

8. The lamp of any preceding claim, wherein the phosphor coating layer (30) is disposed between the inner surface of the envelope and the interior volume.

9. The lamp of any preceding claim, wherein the lamp (10) further includes a barrier layer (14) disposed between the inner surface of the envelope (12) and the phosphor coating layer (30).

10. The lamp of any preceding claim, wherein the phosphor particles comprise zinc silicate particles.

11. The lamp of any preceding claim, wherein the phosphor particles comprise one or more of strontium blue particles, strontium red particles, SECA particles, BAM particles, or BAMn particles, or combinations thereof.

12. The lamp of any preceding claim, wherein the discharge generator comprises electrodes (18) disposed within the interior volume.

13. A method for making a mercury discharge fluorescent lamp that includes a substantially transparent envelope (12) having an inner surface defining a interior volume, the method comprising at least a step of:
disposing a coating (16) on the inner surface of the envelope, the coating comprising a phosphor composition (30) comprising a colloidal alumina, particles comprising at least one rare earth compound, and phosphor particles;
wherein the particles comprising at least one rare earth compound are present in the phosphor composition in an amount from about 0.5 percent to about 5 percent of the weight of the phosphor particles; and wherein the phosphor particles comprise one or more of zinc silicate, strontium green-blue, strontium red, SECA, CBT, CBM, BAM, BAMn, magnesium germanate, SAE, SEB, yttrium vanadate, or combinations of two or more of the foregoing.

14. The method of claim 13, wherein the coating includes a barrier layer (14) disposed between the inner surface of the envelope (12) and the phosphor composition layer (30).

15. The method of claim 13 or claim 14, wherein the method further comprises installing in the envelope a plasma discharge generator including electrodes.
